# EUROPÄISCHE PATENTSCHRIFT

(11) **EP 2 801 166 B1**
(45) Veröffentlichungstag und Bekanntmachung des Hinweises auf die Patenterteilung: **28.06.2017**
(21) Anmeldenummer: 12813845.0
(22) Anmeldetag: 20.12.2012
(51) Int. Cl.: H04L 1/08, G08G 1/09, H04L 1/22, H04L 29/08

(54) **VERFAHREN ZUR ERKENNUNG REDUNDANT EMPFANGENER INFORMATIONEN, FAHRZEUG-ZU-X-KOMMUNIKATIONSSYSTEM UND VERWENDUNG DES SYSTEMS**
METHOD FOR IDENTIFYING REDUNDANTLY RECEIVED INFORMATION, A VEHICLE-TO-X COMMUNICATION SYSTEM, AND A USE OF SAID SYSTEM
PROCÉDÉ D'IDENTIFICATION DE RÉCEPTION REDONDANTE D'INFORMATIONS, SYSTÈME DE COMMUNICATION ENTRE VÉHICULES ET AUTRES VÉHICULES OU INFRASTRUCTURE (V2X) ET UTILISATION DE CE SYSTÈME

(30) Priorität: 06.01.2012 DE 102012200157; 05.10.2012 DE 102012218172
(43) Veröffentlichungstag der Anmeldung: 12.11.2014
(73) Patentinhaber: Continental Teves AG & Co. OHG, 60488 Frankfurt (DE)
(72) Erfinder: STÄHLIN, Ulrich, 65760 Eschborn (DE); SCHERPING, Richard, 65835 Liederbach am Taunus (DE); GROTENDORST, Thomas, 65760 Eschborn (DE)
(74) Vertreter: Wagner, Philipp
(86) Internationale Anmeldenummer: PCT/EP2012/076400
(87) Internationale Veröffentlichungsnummer: WO 2013/102575

(56) Entgegenhaltungen:
- DE-A1-102008 060 231
- US-A1- 2003 043 739
- US-A1- 2009 310 608
- US-A1- 2011 098 877

## Beschreibung

Die Erfindung betrifft ein Verfahren zur Erkennung redundant empfangener Informationen gemäß Oberbegriff von Anspruch 1, ein Fahrzeug-zu-X-Kommunikationssystem gemäß Oberbegriff von Anspruch 11 und dessen Verwendung.

Im Stand der Technik sind bereits Fahrzeug-zu-X-Kommunikationssysteme bekannt, die sowohl zur Übertragung verkehrsbezogener Daten als auch verschiedener Service-Daten, wie etwa Unterhaltungsanwendungen, ausgebildet sind. Die Fahrzeug-zu-X-Kommunikation basiert dabei sowohl auf dem Datenaustausch zwischen Fahrzeugen untereinander (Fahrzeug-zu-Fahrzeug-Kommunikation) als auch auf dem Datenaustausch zwischen Fahrzeugen und Infrastruktureinrichtungen (Fahrzeug-zu-Infrastruktur-Kommunikation). Da zudem empfangene Fahrzeug-zu-X-Botschaften von ihren Empfängern im Rahmen eines oftmals Anwendung findenden sogenannten Multihop-Verfahrens erneut versendet werden, um die effektive Reichweite der Fahrzeug-zu-X-Botschaft somit zu vergrößern, bleibt es in der Regel nicht aus, dass ein und dieselbe Fahrzeug-zu-X-Botschaft mit den in ihr enthaltenen Informationen von einem Empfänger mehrfach redundant empfangen wird.

Die US2009/0310608 offenbart ein Verfahren wo redundante Pakete eliminiert werden. Die DE 10 2008 060 231 A1 beschreibt in diesem Zusammenhang ein Verfahren zum Selektieren von unterschiedlichen, mittels Fahrzeug-zu-X-Kommunikation übertragenen Daten. Anhand eines Daten-Frames werden die empfangenen Daten von einem Datenfilter in der Empfangsvorrichtung unterschieden und beispielsweise an ein Fahrerassistenzsystem oder eine Unterhaltungseinrichtung weitergeleitet. Dies ermöglicht eine Sortierung der empfangenen Daten vor deren eigentlichen Verarbeitung. Zur Übertragung der Daten werden Sende- und Empfangseinrichtungen auf Basis der WLAN-Standards 802.11a/b/g/n bei 2,4 GHz oder des WLAN-Standards 802.11p bei 5,9 GHz genutzt. Um die Daten redundant zu übertragen und die Zuverlässigkeit der Übertragung zu steigern, ist auch ein gleichzeitiges Senden auf beiden WLAN-Frequenzbereichen möglich.

In der DE 10 2011 003 624 A1 wird ein Verfahren zur Reduzierung der Datenauslastung eines Fahrzeug-zu-X-Kommunikationskanals beschrieben, bei welchem eine Fahrzeug-zu-X-Botschaft in wenigstens einer ersten und einer zweiten Teilbotschaft über verschiedene Kommunikationskanäle übertragen wird. Die erste Teilbotschaft enthält dabei verkehrssicherheitsrelevante Informationen, während die zweite Teilbotschaft einen Security Header und teilweise zur ersten Teilbotschaft identische verkehrssicherheitsrelevante Informationen umfasst. Der für die Datensicherheit relevante Anteil einer Gesamtbotschaft wird somit ausschließlich über die zweite Teilbotschaft versendet, wodurch der Datenumfang der ersten Teilbotschaft gering bleibt. Die Prüfung der Datensicherheit und Zuverlässigkeit der ersten Teilbotschaft kann dann über die zweite Teilbotschaft erfolgen, indem die in beiden Botschaften jeweils enthaltenen verkehrssicherheitsrelevanten Informationen verglichen werden. Sofern diese Informationen übereinstimmen, wird auch den ausschließlich in der ersten Teilbotschaft enthaltenen verkehrssicherheitsrelevanten Informationen vertraut. Eine rechenintensive Auswertung eines Security Headers oder eine Dekodierung der ersten Botschaft sind daher ebenfalls nicht notwendig.

Die unveröffentlichte DE 10 2011 006 305 offenbart ein Verfahren zur Reduzierung der Rechenlast bei einer Datensicherheitsprüfung von mittels Fahrzeug-zu-X-Kommunikation empfangenen Datenpaketen. Die Datensicherheitsprüfung besteht hier aus dem Überprüfen einer mittels kryptografischer Algorithmen verschlüsselten Signatur, welche mit hohem Rechenaufwand verbunden ist und den Einsatz dedizierter Elektronik erforderlich macht. Zur Reduzierung der Rechenlast wird zunächst eine Vorverarbeitung der empfangenen Fahrzeug-zu-X-Botschaften vorgenommen, welche diese in unterschiedliche Kategorien priorisiert. Die Priorisierung kann dabei an Hand unterschiedlicher Kriterien, wie z.B. Abstand des Senders zum Empfänger oder TTC (time to collision) des Senders zum Empfänger erfolgen. Zunächst werden nur die Signaturen von mit hoher Priorität versehenen Datenpaketen überprüft. Falls anschließend noch freie Rechenkapazität zur Verfügung steht, werden weitere Datenpakete überprüft. Ebenso wird die Möglichkeit beschrieben, den Inhalt eines Datenpakets mittels Umfeldsensordaten zu verifizieren, wodurch auf eine Überprüfung der Signatur verzichtet werden kann

Allen im Stand der Technik bekannten Fahrzeug-zu-X-Kommunikationsverfahren ist jedoch gemein, dass eine Vorverarbeitung bzw. Vorsortierung empfangener Fahrzeug-zu-X-Botschaften ausschließlich auf eine Reduzierung der zur Überprüfung der Datensicherheit bzw. zur Dekodierung aufzuwendenden Rechenleistung abzielt. Eine unabhängig von der Datensicherheitsprüfung anfallende Verarbeitung der Fahrzeug-zu-X-Botschaften durch die jeweiligen Fahrzeugsysteme wird hingegen nicht weiter berücksichtigt. Sofern eine Fahrzeug-zu-X-Botschaft mehrfach redundant empfangen wurde oder eine Information einer Fahrzeug-zu-X-Botschaft in mehreren unabhängig voneinander empfangenen Fahrzeug-zu-X-Botschaften mehrfach redundant enthalten ist, so wird die entsprechende Information dem jeweiligen Fahrzeugsystem ebenfalls mehrfach redundant zugeführt, wodurch dieses die Information mehrfach in Folge verarbeiten muss. Dies kann eine unnötige Auslastung bis hin zur Überforderung des jeweiligen Fahrzeugsystems bewirken.

Die Aufgabe der vorliegenden Erfindung ist es daher, ein Verfahren vorzuschlagen, welches eine unnötig redundante Verarbeitung von mittels Fahrzeug-zu-X-Kommunikation redundant empfangenen Informationen vermeidet.

Diese Aufgabe wird erfindungsgemäß durch das Verfahren zur Erkennung redundant empfangener Informationen gemäß Anspruch 1 gelöst.

Gemäß dem erfindungsgemäßen Verfahren zur Erkennung redundant empfangener Informationen, bei welchem die Informationen von Fahrzeug-zu-X-Botschaften umfasst sind, wobei eine Fahrzeug-zu-X-Botschaft mindestens eine Information umfasst und wobei von einem Empfänger eine Vielzahl von Fahrzeug-zu-XBotschaften empfangen wird, wird zumindest ein Anteil an einer Gesamtzahl der Informationen redundant empfangen. Das Verfahren zeichnet sich dadurch aus, dass die empfangenen Informationen vor einer Verarbeitung der empfangenen Informationen in eine Informationstabelle eingetragen werden und untereinander abgeglichen werden.

Durch das Eintragen in die Informationstabelle und das Abgleichen der eingetragenen Informationen ergibt sich der Vorteil, dass Informationen, welche z.B. mittels mehrerer Fahrzeug-zu-X-Botschaften redundant empfangen wurden, als redundant empfangen und somit redundant vorliegend erkannt werden. Die Informationstabelle erlaubt dabei eine Auflistung und Übersicht der empfangenen Informationen. Besonders bei einem sogenannten Multihop-Verfahren, bei welchem empfangene Fahrzeug-zu-X-Botschaften und die von ihnen umfassten Informationen vom Empfänger unmittelbar weitergeleitet, also erneut gesendet, werden, ist das erfindungsgemäße Verfahren nützlich, da hier prinzipbedingt eine identische Informationen umfassende Fahrzeug-zu-X-Botschaft von eine Vielzahl von Sendern versendet und somit von den Empfängern in der Regel mehrfach redundant empfangen wird. Durch das Erkennen eines redundanten Empfangs von Informationen vor deren Verarbeitung können wirkungsvolle Schritte unternommen werden, um für die Verarbeitung der redundanten Informationen notwendige Rechenleistung zu reduzieren.

Bevorzugt ist es vorgesehen, dass die redundant empfangenen Informationen der Verarbeitung nicht redundant zugeführt werden. Dies kann eine Überforderung bzw. eine Überlastung der entsprechenden Fahrerassistenzsysteme vermeiden, da diese die Informationen nur noch einmal verarbeiten müssen. Ein Informationsschwund tritt dennoch nicht auf, da keine nur einfach vorliegenden Informationen zurückgehalten werden, sondern ausschließlich redundant vorliegende Informationen nur einmal verarbeitet werden.

Weiterhin ist es bevorzugt, dass die Verarbeitung durch ein Fahrerassistenzsystem erfolgt, wobei das Fahrerassistenzsystem insbesondere zur Ausführung eines autonomen Bremseneingriffs und/oder eines autonomen Lenkeingriffs und/oder einer Bewarnung eines Fahrers ausgebildet ist. Gerade in diesem Fall ist die Vermeidung einer Überforderung bzw. Überlastung des genannten Fahrerassistenzsystems durch eine unnötige Informationsflut von besonderer Bedeutung, da derartige Fahrerassistenzsysteme sicherheitskritische Funktionen ausführen.

Außerdem ist es vorgesehen, dass die Fahrzeug-zu-X-Botschaften über unterschiedliche Kommunikationswege übertragen werden. Somit ist das erfindungsgemäße Verfahren nicht ausschließlich auf das Erkennen von Informationen beschränkt, die über ein und denselben Kommunikationsweg übertragen wurden. Da im Prinzip eine Vielzahl unterschiedlicher Kommunikationswege möglich ist und in der Regel auch genutzt wird, kann das erfindungsgemäße Verfahren vorteilhaft auf diese unterschiedlichen Kommunikationswege ausgedehnt werden. Außerdem kann auf diese Weise eine in die Informationstabelle eingetragene Information ggf. ergänzt werden, wenn eine über einen anderen Kommunikationsweg empfangene Information detaillierter oder vollständiger ist.

Insbesondere ist es vorgesehen, dass die unterschiedlichen Kommunikationswege auf mindestens einer der folgenden Verbindungsarten basieren:
- WLAN-Verbindung, insbesondere nach IEEE 802.11p,
- WiFi-Direct,
- ISM-Verbindung (Industrial, Scientific, Medical Band), insbesondere über eine funkverbindungsfähige Schließvorrichtung,
- Bluetooth-Verbindung,
- ZigBee-Verbindung,
- UWB-Verbindung (Ultra Wide Band),
- WiMax (Worldwide Interoperability for Microwave Access),
- Remote-Keyless-Entry-Verbindung,
- Mobilfunkverbindung, insbesondere GSM-, GPRS-, EDGE-, UMTS- und/oder LTE-Verbindungen und
- Infrarotverbindung.
Diese Verbindungsarten bieten dabei unterschiedliche Vorteile, je nach Art, Wellenlänge und verwendetem Datenprotokoll. So ermöglichen einige der genannten Verbindungsarten z.B. eine vergleichsweise hohe Datenübertragungsrate und einen vergleichsweise schnellen Verbindungsaufbau, andere hingegen eignen sich weitestgehend sehr gut zur Datenübertragung um Sichthindernisse herum. Durch die Kombination und gleichzeitige bzw. parallele Nutzung mehrerer dieser Verbindungsarten ergeben sich weitere Vorteile, da so auch Nachteile einzelner Verbindungsarten ausgeglichen werden können.

Zweckmäßigerweise ist es vorgesehen, dass die empfangenen Fahrzeug-zu-X-Botschaften von einer Vielzahl unterschiedlicher Sender stammen. Somit kann beispielsweise die im Rahmen eines Multihop-Verfahrens oftmals entstehende Informationsflut wirkungsvoll daran gehindert werden, zur Überlastung oder Überforderung eines Fahrerassistenzsystems zu führen.

Vorzugsweise zeichnet sich das erfindungsgemäße Verfahren dadurch aus, dass die redundant empfangenen Informationen in der Informationstabelle aufgrund ihrer Redundanz validiert werden, insbesondere wenn sie von unterschiedlichen Sendern stammen. Damit ergibt sich eine einfache Möglichkeit, empfangene Informationen ohne zusätzlichen Hardwareaufwand oder zumindest ohne zusätzlichen Rechenaufwand zu validieren.

Außerdem ist es vorteilhaft, dass in die Informationstabelle nur eine vorgegebene Anzahl von Informationen eingetragen wird. Dadurch ist gewährleistet, dass die Informationstabelle einen vorgegebenen Daten- und Speicherumfang nicht überschreitet und somit alle in ihr eingetragenen Informationen mit angemessenem Rechenaufwand abgleichbar bleiben.

In einer weiteren bevorzugten Ausführungsform der Erfindung ist es vorgesehen, dass bei redundant empfangenen identischen Informationen die Information mit der höchsten Informationsauflösung in die Informationstabelle eingetragen wird und insbesondere der Verarbeitung zugeführt wird, wobei bereits eingetragene identische Informationen mit geringerer Informationsauflösung aus der Informationstabelle gelöscht werden. Der Begriff Informationsauflösung beschreibt dabei im Sinne der Erfindung eine Detailtiefe einer Information. Beispielsweise kann eine Information über ein verunfalltes Fahrzeug, welches nun ein Verkehrshindernis und damit eine Gefahr für den nachfolgenden Verkehr darstellt, mit unterschiedlicher Informationsauflösung beschrieben werden. In einer Ausführungsform mit geringer Informationsauflösung wird etwa nur das Vorhandensein des verunfallten Fahrzeugs bei einer bestimmten Ortsposition beschrieben. In einer höheren Informationsauflösung beschreibt eine identische Information z.B. zusätzlich die Art der Verunfallung, die Anzahl der am Unfallort befindlichen Personen und die genaue Fahrspur, auf welcher sich das verunfallte Fahrzeug befindet. Indem ausschließlich die Information mit der höheren Informationsauflösung in die Informationstabelle eingetragen und der Verarbeitung zugeführt wird, wird die bestmögliche vorhandene Informationsauflösung genutzt. In der Regel kommen unterschiedliche Informationsauflösungen zustande, wenn Informationen bzw. Fahrzeug-zu-X-Botschaften über unterschiedliche Kommunikationswege übertragen werden, die unterschiedliche Übertragungsbandbreiten aufweisen.

Weiterhin ist es vorteilhaft, dass den in die Informationstabelle eingetragenen Informationen eine Vorhaltedauer zugwiesen wird, wobei die eingetragenen Informationen nach Ablauf der Vorhaltedauer gelöscht werden. Dadurch wird sichergestellt, dass Informationen in der Informationstabelle nicht länger vorgehalten werden, als sie voraussichtlich benötigt werden, um eine Überlastung oder Überforderung eines Fahrerassistenzsystems durch eine Informationsflut zu vermeiden. Diese Ausführungsform trägt außerdem dazu bei, den Daten- und Speicherumfang der Informationstabelle ein vorgegebenes Maß nicht überschreiten zu lassen.

Weiterhin ist es besonders vorteilhaft, dass die Vorhaltedauer einer in die Informationstabelle eingetragenen Information nach deren sicherheitsrelevanter Bedeutsamkeit bestimmt wird. So kann etwa eine Information, die einen Eingriff in die Fahrzeugsteuerung in Form eines Lenkeingriffs oder Bremseneingriffs bewirkt, länger vorgehalten werden als eine Information, welche das Vorschlagen einer geänderten Routenführung bewirkt. Daraus ergibt sich der Vorteil, dass eine Überlastung oder Überforderung eines sicherheitsrelevanten Fahrerassistenzsystems durch eine Informationsflut besonders zuverlässig vermieden wird.

Zweckmäßigerweise ist es vorgesehen, dass bei redundant empfangenen Informationen die jüngste empfangene Information in die Informationstabelle eingetragen wird, wobei eine bereits eingetragene ältere identische Information aus der Informationstabelle gelöscht wird. Daraus ergibt sich der Vorteil, dass z.B. die Vorhaltedauer der Information in der Informationstabelle ausgehend vom Zeitpunkt des Empfangs oder einem von der Fahrzeug-zu-X-Botschaft umfassten Zeitstempel neu bestimmt bzw. verlängert werden kann.

Die Erfindung betrifft weiter ein Fahrzeug-zu-X-Kommunikationssystem, welches eine Kommunikationseinheit zum Empfangen und Versenden von Fahrzeug-zu-X-Botschaften, ein Informationstabellenmodul zum Eintragen und Löschen von empfangenen Informationen in eine Informationstabelle und ein Abgleichsmodul zum Abgleichen von in die Informationstabelle eingetragenen Informationen umfasst. Das erfindungsgemäße Fahrzeug-zu-X-Kommunikationssystem zeichnet sich dadurch aus, dass das Fahrzeug-zu-X-Kommunikationssystem das erfindungsgemäße Verfahren ausführt. Das erfindungsgemäße System umfasst somit alle notwendigen Vorrichtungen zur Ausführung des erfindungsgemäßen Verfahrens und führt dieses aus. Es ermöglicht somit auf einfache Weise eine Erkennung von redundant empfangenen Informationen. Daraus ergeben sich die bereits beschriebenen Vorteile.

Bevorzugt ist es vorgesehen, dass die Kommunikationseinheit und/oder das Abgleichsmodul und/oder das Informationstabellenmodul einen gemeinsamen Chipsatz und insbesondere ein gemeinsames elektronisches Rechenwerk umfassen. Daraus ergibt sich der Vorteil, dass nicht jedes der genannten Module mit einem eigenen Rechenwerk versehen werden muss, was sowohl den Herstellungsprozess vereinfacht als auch die Produktionskosten reduziert. Durch den gemeinsamen Zugriff unterschiedlicher Module auf dasselbe Rechenwerk ergibt sich zudem eine effektive und schnelle Datenverknüpfung der Module.

Des Weiteren betrifft die vorliegende Erfindung eine Verwendung des erfindungsgemäßen Fahrzeug-zu-X-Kommunikationssystems in einem Kraftfahrzeug.

Weitere bevorzugte Ausführungsformen ergeben sich aus den Unteransprüchen und der nachfolgenden Beschreibung eines Ausführungsbeispiels an Hand von Figuren.

Es zeigt
- Fig. 1: eine mögliche Ausführungsform der erfindungsgemäßen Informationstabelle und
- Fig. 2: ein Flussdiagramm eines möglichen Ablaufs des erfindungsgemäßen Verfahrens.

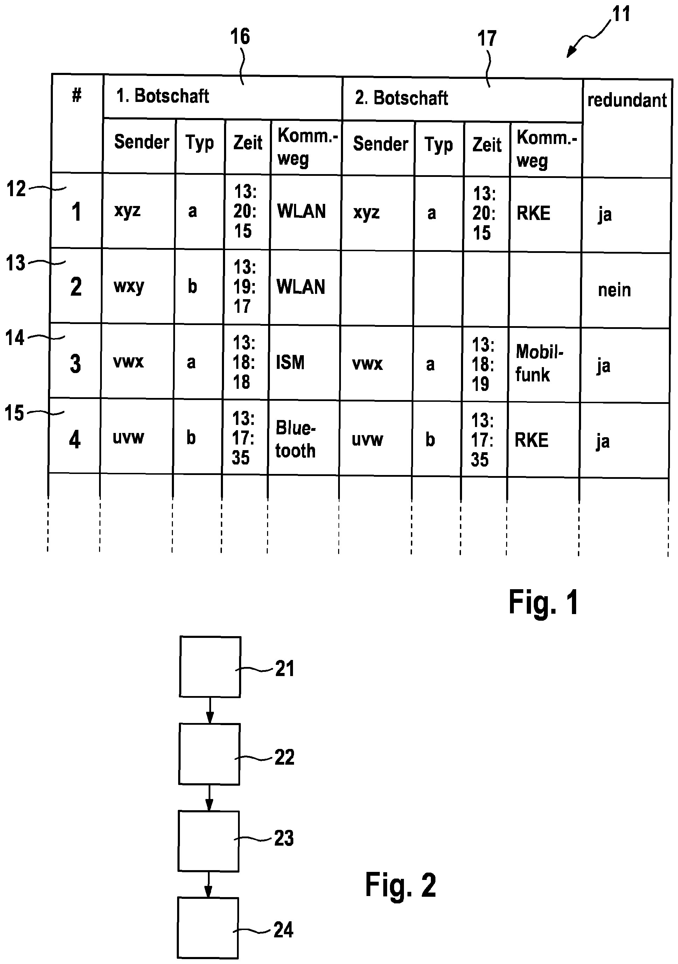

Fig. 1 zeigt Informationstabelle 11, in welche vier empfangene Informationen 12, 13, 14 und 15 eingetragen sind. Information 12 stammt von Sender "xyz" und ist eine sicherheitsrelevante Information, was durch die Kategorisierung der Information als Typ "a" gekennzeichnet wird. Da Information 12 zweimal empfangen wurde (mittels "1. Botschaft" 16 und "2 Botschaft" 17), liegt sie redundant vor. Als Kommunikationsweg wurde für "1. Botschaft" 16 WLAN nach IEEE 802.11p genutzt und für "2 Botschaft" 17 eine RKE-basierte Funkverbindung. Da beide Fahrzeug-zu-X-Botschaften eine identische Informationen umfassen, einen identischen Zeitstempel "13:20:15" aufweisen, vom selben Sender stammen und zusätzlich beide als Typ "a" kategorisiert sind, wird Informationen 12 als redundant gekennzeichnet. Als redundant gekennzeichnete Informationen 12 gilt als validiert und wird nur einmal einer Verarbeitung durch das jeweils entsprechende Fahrerassistenzsystem zugeführt. Da über WLAN empfangene von "1. Botschaft" 16 umfasste Information 12 aufgrund der im Vergleich zu RKE größeren Übertragungsbandbreite eine höhere Informationsauflösung besitzt, wird in diesem Fall über WLAN empfangene Information 12 an das zugehörige Assistenzsystem weitergeleitet und von diesem verarbeitet.

Information 13 wurde nur einmal mittels WLAN nach IEEE 802.11p empfangen. Der Sender von Information 13 ist "wxy". Information 13 wird mit dem Zeitstempel "13:19:17" in Informationstabelle 11 eingetragen. Da ein Abgleich mit weiteren empfangenen Botschaften auch von anderen Sendern keine Übereinstimmung mit Information 13 ergibt, bleibt das Feld "2. Botschaft" 17 von Information 13 leer. Da die Kategorisierung mit "b" angegeben ist und "b" für nichtsicherheitsrelevante Informationen steht, wird Information 13 zwar regulär verarbeitet, aber es wird ihr keine weitere Bedeutung zugemessen.

Weiterhin ist Information 14 dargestellt, welche von Sender "vwx" von zwei aufeinanderfolgenden Fahrzeug-zu-X-Botschaften umfasst einmal mit dem Zeitstempel "13:18:18" und einmal mit dem Zeitstempel "13:18:19" gesendet wurde. Ein Abgleich ergibt, dass die Informationen identisch sind. Information 13 beschreibt eine scharfe Bremsung des Senders "vwx" und wird daher als Typ "a" kategorisiert. "1. Botschaft" 16 wurde mittels ISM-Funk empfangen, "2. Botschaft" 17 mittels Mobilfunk. Da "2. Botschaft" 17 aktueller ist als "1. Botschaft" 106, wird "2. Botschaft" 17 an die entsprechenden Assistenzsysteme zur Verarbeitung weitergeleitet. Zudem gilt Botschaft 14 als validiert, da sie redundant vorliegt.

Außerdem enthält Informationstabelle 11 Botschaft 15, die von Sender "uvw" stammt und als Typ "b" kategorisiert ist. Botschaft 15 wurde mit identischem Zeitstempel "13:17:35" einmal über Bluetooth und einmal über eine RKE-basierte Funkverbindung empfangen. Da Information 15 somit redundant vorliegt, wird sie in Informationstabelle 11 entsprechend markiert, gilt als validiert und wird nur einmal verarbeitet.

Fig. 2 zeigt ein Flussdiagramm, welches eine beispielhafte Ausführungsform des erfindungsgemäßen Verfahrens darstellt. In Verfahrensschritt 21 wird zunächst von einem Empfänger eine Vielzahl von Fahrzeug-zu-X-Botschaften empfangen, welche jeweils mindestens eine Information umfassen. In Schritt 22 werden die empfangenen Informationen in eine Informationstabelle eingetragen und untereinander abgeglichen. Entsprechend dem Ergebnis des Abgleichs werden die als redundant erkannten Informationen in Verfahrensschritt 23 als validiert gekennzeichnet und die redundanten Informationen soweit aus der Informationstabelle gelöscht, dass jede Information nur noch einfach vorliegt. In Schritt 24 schließlich werden die Informationen an die entsprechenden Fahrerassistenzsysteme weitergeführt und von diesen verarbeitet.

## Patentansprüche

1. Verfahren zur Erkennung redundant empfangener Informationen, bei welchem die Informationen (12, 13, 14, 15) von Fahrzeug-zu-X-Botschaften (16, 17) umfasst sind, wobei eine Fahrzeug-zu-X-Botschaft (16, 17) mindestens eine Information (12, 13, 14, 15) umfasst, wobei von einem Empfänger eine Vielzahl von Fahrzeug-zu-X-Botschaften (16, 17) empfangen wird und wobei zumindest ein Anteil an einer Gesamtzahl der Informationen (12, 13, 14, 15) redundant empfangen wird, wobei die empfangenen Informationen (12, 13, 14, 15) vor einer Verarbeitung der empfangenen Informationen (12, 13, 14, 15) in eine Informationstabelle (11) eingetragen werden und untereinander abgeglichen werden. **dadurch gekennzeichnet, dass** die redundant empfangenen Informationen (12, 13, 14, 15) der empfangenen Fahrzeug-zu-X-Botschaften (16, 17), die von einer Vielzahl unterschiedlicher Sendern stammen, der Verarbeitung nicht redundant zugeführt werden.

2. Verfahren nach Anspruch 1, **dadurch gekennzeichnet, dass** die Verarbeitung durch ein Fahrerassistenzsystem erfolgt, wobei das Fahrerassistenzsystem insbesondere zur Ausführung eines autonomen Bremseneingriffs und/oder eines autonomen Lenkeingriffs und/oder einer Bewarnung eines Fahrers ausgebildet ist.

3. Verfahren nach mindestens einem der Ansprüche 1 bis 2,
**dadurch gekennzeichnet, dass** die Fahrzeug-zu-X-Botschaften (16, 17) über unterschiedliche Kommunikationswege übertragen werden.

4. Verfahren nach Anspruch 3,
**dadurch gekennzeichnet, dass** die unterschiedlichen Kommunikationswege auf mindestens einer der folgenden Verbindungsarten basieren:
- WLAN-Verbindung, insbesondere nach IEEE 802.11p,
- WiFi-Direct,
- ISM-Verbindung (Industrial, Scientific, Medical Band), insbesondere über eine funkverbindungsfähige Schließvorrichtung,
- Bluetooth-Verbindung,
- ZigBee-Verbindung,
- UWB-Verbindung (Ultra Wide Band),
- WiMax (Worldwide Interoperability for Microwave Access),
- Remote-Keyless-Entry-Verbindung,
- Mobilfunkverbindung, insbesondere GSM-, GPRS-, EDGE-, UMTS- und/oder LTE-Verbindungen und
- Infrarotverbindung.

5. Verfahren nach mindestens einem der Ansprüche 1 bis 4,
**dadurch gekennzeichnet, dass** die redundant empfangenen Informationen (12, 13, 14, 15) in der Informationstabelle (11) aufgrund ihrer Redundanz validiert werden, insbesondere wenn sie von unterschiedlichen Sendern stammen.

6. Verfahren nach mindestens einem der Ansprüche 1 bis 5,
**dadurch gekennzeichnet, dass** in die Informationstabelle (11) nur eine vorgegebene Anzahl von Informationen (12, 13, 14, 15) eingetragen wird.

7. Verfahren nach mindestens einem der Ansprüche 1 bis 6,
**dadurch gekennzeichnet, dass** bei redundant empfangenen identischen Informationen (12, 13, 14, 15) die Information (12, 13, 14, 15) mit der höchsten Informationsauflösung in die Informationstabelle (11) eingetragen wird und insbesondere der Verarbeitung zugeführt wird, wobei bereits eingetragene identische Informationen (12, 13, 14, 15) mit geringerer Informationsauflösung aus der Informationstabelle (11) gelöscht werden.

8. Verfahren nach mindestens einem der Ansprüche 1 bis 7,
**dadurch gekennzeichnet, dass** den in die Informationstabelle (11) eingetragenen Informationen (12, 13, 14, 15) eine Vorhaltedauer zugwiesen wird, wobei die eingetragenen Informationen (12, 13, 14, 15) nach Ablauf der Vorhaltedauer gelöscht werden.

9. Verfahren nach Anspruch 8,
**dadurch gekennzeichnet, dass** die Vorhaltedauer einer in die Informationstabelle (11) eingetragenen Information (12, 13, 14, 15) nach deren sicherheitsrelevanter Bedeutsamkeit bestimmt wird.

10. Verfahren nach mindestens einem der Ansprüche 1 bis 9,
**dadurch gekennzeichnet, dass** bei redundant empfangenen Informationen (12, 13, 14, 15) die jüngste empfangene Information (12, 13, 14, 15) in die Informationstabelle (11) eingetragen wird, wobei eine bereits eingetragene ältere identische Information (12, 13, 14, 15) aus der Informationstabelle (11) gelöscht wird.

11. Fahrzeug-zu-X-Kommunikationssystem, umfassend eine Kommunikationseinheit zum Empfangen und Versenden von Fahrzeug-zu-X-Botschaften (16, 17), ein Informationstabellenmodul zum Eintragen und Löschen von empfangenen Informationen (12, 13, 14, 15) in eine Informationstabelle (11) und ein Abgleichsmodul zum Abgleichen von in die Informationstabelle eingetragenen Informationen (12, 13, 14, 15),
**dadurch gekennzeichnet,**
**dass** das Fahrzeug-zu-X-Kommunikationssystem ein Verfahren nach mindestens einem der Ansprüche 1 bis 10 ausführt.

12. System nach mindestens Anspruch 11,
**dadurch gekennzeichnet, dass** die Kommunikationseinheit und/oder das Abgleichsmodul und/oder das Informationstabellenmodul einen gemeinsamen Chipsatz und insbesondere ein gemeinsames elektronisches Rechenwerk umfassen.

13. Verwendung des Fahrzeug-zu-X-Kommunikationssystems nach mindestens einem der Ansprüche 11 und 12 in einem Kraftfahrzeug.

## Claims

1. A method for identifying redundantly received information items in which the information items (12, 13, 14, 15) are comprised by vehicle-to-X messages (16, 17), wherein a vehicle-to-X message (16, 17) comprises at least one information item (12, 13, 14, 15), wherein a receiver receives a plurality of vehicle-to-X messages (16, 17) and wherein at least a part of a total number of the information items (12, 13, 14, 15) is received redundantly,
wherein, prior to processing the received information items (12, 13, 14, 15), the received information items (12, 13, 14, 15) are entered into an information table (11) and compared with one another,
**characterized in that** the redundantly received information items (12, 13, 14, 15) from the received vehicle-to-X messages (16, 17) originating from a plurality of different transmitters are supplied to the processing in non-redundant form.

2. The method according to Claim 1,
**characterized in that** the processing is effected by a driver assistance system, wherein the driver assistance system is designed in particular to perform an autonomous braking intervention and/or an autonomous steering intervention and/or a warning to a driver.

3. The method according to at least one of Claims 1 to 2,
**characterized in that** the vehicle-to-X messages (16, 17) are transmitted via different communication channels.

4. The method according to Claim 3,
**characterized in that** the different communication channels are based on at least one of the following connection types:
- WLAN connection, in particular based on IEEE 802.11p,
- WiFi Direct,
- ISM (industrial, scientific and medical radio band) connection, in particular via a closing device with radio connection capability,
- Bluetooth connection,
- ZigBee connection,
- UWB (Ultra Wide Band) connection,
- WiMax (Worldwide Interoperability for Microwave Access),
- Remote Keyless Entry connection,
- mobile radio connection, in particular GSM, GPRS, EDGE, UMTS and/or LTE connections, and
- infrared connection.

5. The method according to at least one of Claims 1 to 4,
**characterized in that** the redundantly received information items (12, 13, 14, 15) in the information table (11) are validated based on their redundancy, in particular when they originate from different transmitters.

6. The method according to at least one of Claims 1 to 5,
**characterized in that** only a predetermined number of information items (12, 13, 14, 15) are entered into the information table (11).

7. The method according to at least one of Claims 1 to 6,
**characterized in that**, in the case of redundantly received identical information items (12, 13, 14, 15), the information item (12, 13, 14, 15) with the highest information resolution is entered into the information table (11) and in particular is supplied to the processing, wherein already entered identical information items (12, 13, 14, 15) with lower information resolution are deleted from the information table (11).

8. The method according to at least one of Claims 1 to 7,
**characterized in that** the information items (12, 13, 14, 15) entered into the information table (11) are assigned a retention period, wherein the entered information items (12, 13, 14, 15) are deleted after the retention period has expired.

9. The method according to Claim 8,
**characterized in that** the retention period of an information item (12, 13, 14, 15) entered into the information table (11) is determined based on its safety-relevant significance.

10. The method according to at least one of Claims 1 to 9,
**characterized in that**, in the case of redundantly received information items (12, 13, 14, 15), the most recently received information item (12, 13, 14, 15) is entered into the information table (11), wherein an already entered older identical information item (12, 13, 14, 15) is deleted from the information table (11).

11. A vehicle-to-X communication system, comprising a communication unit for receiving and sending vehicle-to-X messages (16, 17), an information table module for entering and deleting received information items (12, 13, 14, 15) into and from an information table (11), and a comparison module for comparing information items (12, 13, 14, 15) entered into the information table,
**characterized in that** the vehicle-to-X communication system performs a method according to at least one of claims 1 to 10.

12. The system according to Claim 11,
**characterized in that** the communication unit and/or the comparison module and/or the information table module comprise a common chipset and in particular a common electronic arithmetic logic unit.

13. A use of the vehicle-to-X communication system according to at least one of Claims 11 and 12 in a motor vehicle.

## Revendications

1. Procédé d'identification d'informations de réception redondantes, où les informations (12, 13, 14, 15) sont incluses dans des messages de véhicule à X (16, 17), un message de véhicule à X (16, 17) comprenant au moins une information (12, 13, 14, 15), une pluralité de messages de véhicule à X (16, 17) étant reçue par un récepteur et au moins une partie de la quantité totale d'informations (12, 13, 14, 15) étant reçue de manière redondante, les informations (12, 13, 14, 15) reçues étant enregistrées dans un tableau d'informations (11) et comparées entre elles avant traitement des informations (12, 13, 14, 15) reçues,
**caractérisé en ce que** les informations (12, 13, 14, 15) reçues de manière redondante des messages de véhicule à X (16, 17) reçus qui proviennent d'une pluralité d'émetteurs différents, sont acheminées vers le traitement de manière non redondante.

2. Procédé selon la revendication 1,
**caractérisé en ce que** le traitement est exécuté par un système d'assistance au conducteur, ledit système d'assistance au conducteur étant en particulier prévu pour l'exécution d'une intervention autonome de freinage et/ou d'une intervention autonome de braquage et/ou d'un avertissement d'un conducteur.

3. Procédé selon au moins une des revendications 1 et 2,
**caractérisé en ce que** les messages de véhicule à X (16, 17) sont transmis par différents moyens de communication.

4. Procédé selon la revendication 3,
**caractérisé en ce que** les différents moyens de communication sont basés sur au moins un des types de connexion suivantes :
- connexion WLAN, en particulier suivant IEEE 802.11p,
- connexion WiFi-Direct,
- connexion ISM (bande industrielle, scientifique et médicale), en particulier au moyen d'un dispositif de fermeture apte à une liaison radio,
- connexion Bluetooth,
- connexion ZigBee,
- connexion UWB (bande ultra large),
- WiMax (interopérabilité internationale pour accès par micro-ondes),
- connexion d'entrée à télécommande sans clé,
- connexion mobile, en particulier GSM, GPRS, EDGE, OMIS et/ou LTE, et
- connexion infrarouge.

5. Procédé selon au moins une des revendications 1 à 4,
**caractérisé en ce que** les informations (12, 13, 14, 15) reçues de manière redondante sont validées dans le tableau d'informations (11) sur la base de leur redondance, en particulier sil elles proviennent d'émetteurs différents.

6. Procédé selon au moins une des revendications 1 à 5,
**caractérisé en ce que** seul un nombre défini d'informations (12, 13, 14, 15) est enregistré dans le tableau d'informations (11).

7. Procédé selon au moins une des revendications 1 à 6,
**caractérisé en ce qu'**en cas d'informations (12, 13, 14, 15) reçues de manière redondante identiques, l'information (12, 13, 14, 15) ayant la résolution d'information la plus élevée est enregistrée dans le tableau d'informations (11) et est acheminée en particulier au traitement, des informations (12, 13, 14, 15) identiques déjà enregistrées à résolution d'information moindre étant effacées du tableau d'informations (11).

8. Procédé selon au moins une des revendications 1 à 7,
**caractérisé en ce qu'**une durée de conservation est attribuée aux informations (12, 13, 14, 15) enregistrées dans le tableau d'informations (11), les informations (12, 13, 14, 15) enregistrées étant effacées après écoulement de la durée de conservation.

9. Procédé selon la revendication 8,
**caractérisé en ce que** la durée de conservation d'une information (12, 13, 14, 15) enregistrée dans le tableau d'informations (11) est déterminée en fonction de son importance en matière de sécurité.

10. Procédé selon au moins une des revendications 1 à 9,
**caractérisé en ce qu'**en cas d'informations (12, 13, 14, 15) reçues de manière redondante, la dernière information (12, 13, 14, 15) reçue est enregistrée dans le tableau d'informations (11), une information (12, 13, 14, 15) identique plus ancienne déjà enregistrée étant effacée du tableau d'informations (11).

11. Système de communication de véhicule à X, comprenant une unité de communication pour la réception et l'émission de messages de véhicule à X (16, 17), un module de tableau d'informations pour l'enregistrement et l'effacement d'informations (12, 13, 14, 15) reçues dans un tableau d'informations (11) et un module de comparaison pour la comparaison des informations (12, 13, 14, 15) enregistrées dans le tableau d'informations,
**caractérisé en ce que** ledit système de communication de véhicule à X exécute un procédé selon au moins une des revendications 1 à 10.

12. Système selon la revendication 11,
**caractérisé en ce que** l'unité de communication et/ou le module de comparaison et/ou le module de tableau d'informations comprennent un jeu de puces commun et en particulier une unité de calcul électronique commune.

13. Utilisation du système de communication de véhicule à X selon au moins une des revendications 11 et 12 dans un véhicule automobile.
